Europäisches Patentamt

European Patent Office

Office européen des brevets

(11) Publication number: **0 551 891 A2**

# EUROPEAN PATENT APPLICATION

(21) Application number: **93100442.8**

(22) Date of filing: **14.01.93**

(51) Int. Cl.⁵: **B62D 1/00**

(30) Priority: **17.01.92 JP 6260/92**

(43) Date of publication of application:
**21.07.93 Bulletin 93/29**

(84) Designated Contracting States:
**DE FR GB IT**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Fukunaga, Takashi**
**1-11, Miyakogaoka-cho**
**Hirakata-shi, Osaka-fu(JP)**
Inventor: **Segawa, Akiyoshi**
**17-5-301, Taishibashi 3-chome, Asahi-ku**
**Osaka-shi, Osaka-fu(JP)**

(74) Representative: **Eisenführ, Speiser & Partner**
**Martinistrasse 24**
**W-2800 Bremen 1 (DE)**

(54) **Apparatus for controlling steering angle of rear wheel of four-wheel steering vehicle and method therefor.**

(57) An apparatus for controlling the steering angle of the rear wheel of a four-wheel steering vehicle wherein the control device subtracts values A, B, C, and D from a target yaw rate of the vehicle set based on values detected by the vehicle speed sensor and the handle angle sensor, and in a yaw rate feedback loop, the loop is stabilized by performing the feedback of the difference between a target yaw rate and an actual yaw rate, the position and speed of an electric motor and/or those of the rear wheel.

Fig. 1

EP 0 551 891 A2

## BACKGROUND OF THE INVENTION

### Field of the Invention

The present invention relates to an apparatus for controlling the steering angle of the rear wheel of a four-wheel steering vehicle in which the rear wheel is steered according to the state of a vehicle and a method therefor.

### Description of the Related Arts

As disclosed in Japanese Patent Laid-Open Publication No. 1-22675, in the four wheel-steering apparatus, the steering angle ratio between the front wheel and the rear wheel is set to a value at which the phase of the steering angle of the rear wheel is opposite to that of the steering angle of the front wheel when a vehicle is traveling at a speed lower than a predetermined speed, while the steering angle ratio therebetween is set to a value at which the phase of the rear wheel is the same as that of the front wheel when the vehicle is traveling at a speed higher than the predetermined speed.

The main advantage of the four-wheel steering vehicle is that the vehicle moves laterally earlier than a front wheel steering vehicle after a handle is steered because the former allows the front wheel tire and the rear wheel tire to generate the cornering force thereof almost simultaneously. That is, in the four-wheel steering vehicle, if the vehicle is steered at an appropriate steering ratio in such a manner that the phase of the steering angle of the rear wheel is opposite to that of the front wheel in a low speed travel and the phase of the rear wheel is the same as that of the front wheel in a high speed travel. In this manner, the rotational motion starts earlier. That is, the four-wheel steering vehicle has an earlier lateral acceleration response to the steering than the front wheel steering vehicle. As a practical effect, the four-wheel steering vehicle is capable of turning in a small radius of curvature at a low speed and avoiding danger at a high speed.

A method for determining the steering angle of the rear wheel is proposed in, for example, Toyota Technical Review (Volume 41, No. 1, from page 52 through page 56, published in May, 1991). According to the description made in the book, the rear wheel is steered independently of the front wheel; means for detecting yaw rate (angular velocity about the center of gravity of vehicle) is provided; the rear wheel is steered based on a handle angle, a vehicle speed, and the yaw rate. Even though a predetermined travel direction of a vehicle deviates from a predetermined direction or the actual direction thereof deviates from the predetermined travel direction due to disturbances such as side wind or an unfavorable state of a road surface, the deviation can be corrected.

The above conventional apparatus will be described below in detail. The equation for determining the steering angle of the rear wheel is as follows:

$$\theta r = -kf \times \theta f + kr \times V \times Y \qquad (1)$$

where kf and kr: proportional constant (k>0), V: vehicle speed, Y: yaw rate of vehicle.

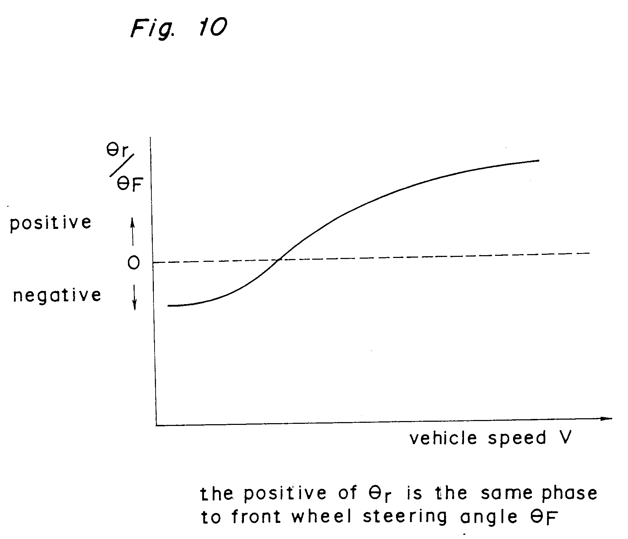

According to the above equation, an example of the relationship between $\theta r$ set in a steady state when $\theta r$ has been determined and a vehicle speed V is shown in Fig. 10. As apparent from Fig. 10, the phase of the front wheel is opposite to that of the rear wheel at a low speed while both wheels are in the same phase at a high speed. Accordingly, the angle of side-slip (the difference between predetermined travel direction of vehicle and actual direction thereof) can be reduced. That is, the vehicle is capable of turning in a small radius of curvature at a low speed and avoiding danger at a high speed. Further, when the vehicle is in a transient state, for example, in a lane change when the vehicle is traveling linearly, the rear wheel is steered in a phase opposite to that of the front wheel until the yaw rate is generated in the vehicle. In this manner, the rise of the yaw rate is made early and hence a side-slip occurs in a small degree in the transient state. In addition, when the vehicle is traveling linearly at a high speed, only the second term of equation 1 becomes effective. Therefore, the angle $\theta r$ of the rear wheel can be effectively controlled by yaw rate (Y) and consequently, disturbances such as side wind or a bad state of a road surface can be prevented from unfavorably influencing on the travel direction of the vehicle.

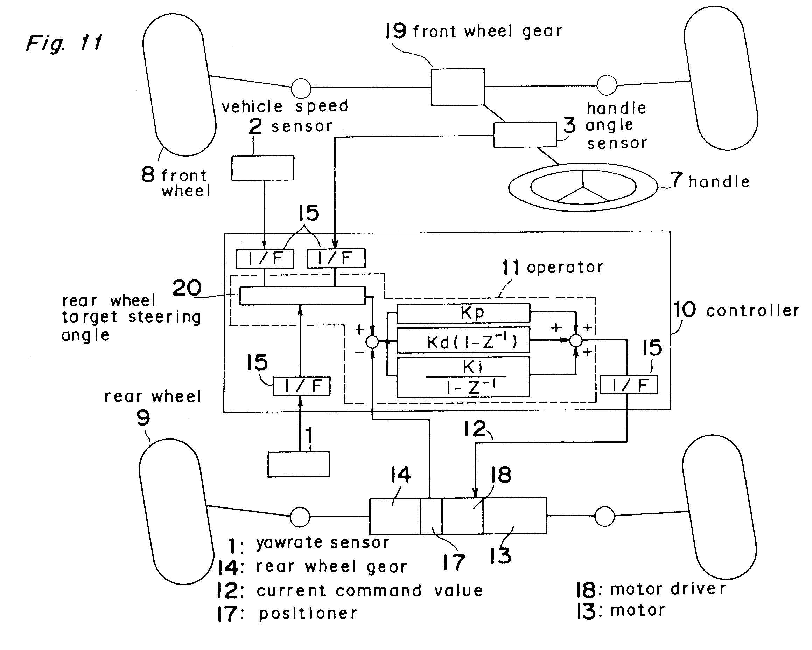

Another conventional apparatus of this kind for determining the steering angle of the rear wheel is described below with reference to Fig. 11. Fig. 11 is a schematic view showing a conventional apparatus for controlling the steering angle of the rear wheel of a four-wheel steering vehicle. A front wheel 8 is steered via a front wheel gear 19 by rotating a handle 7. A controller 10 outputs an electric current instruction signal 12 to a motor driver 18. In response to signal outputted from the motor driver 18, a rear wheel 9 is steered by a motor 13 via a rear wheel gear 14. When the front wheel 8 or the rear wheel 9 is steered, a rotational motion is generated about the center of gravity of the vehicle and the angular velocity (yaw rate) of the rotation is detected by a yaw rate sensor 1. The speed of the vehicle detected by a vehicle speed sensor 2 and the rotational angle of the handle detected by a handle angle sensor 3 are inputted to the controller 10 via an interface circuit 15. A calculator 11 of the controller 10 calculates a target steering angle 20 of the rear wheel required to improve the travel stability of the vehicle according to the vehicle speed, the handle angle, and the yaw rate thus detected, thus outputting an instruction signal for steering the rear wheel to the motor driver 18 so that the position of the rear wheel follows the target steering angle 20 of the rear wheel.

The controller 10 executes the following processing. That is, the controller 10 determines the target steering angle of the rear wheel for each sampling cycle based on the vehicle speed, the handle angle, and the yaw rate so that the steering angle of the rear wheel follows the target steering angle of the rear wheel. Then, the controller 10 calculates a proportional value which is the product of the deviation value between the target steering angle of the rear wheel and the position of the rear wheel detected by a motor position detector 17 and a constant Kp; a differential value obtained by multiplying the rate of change of the deviation value by a constant Kd; and an integral value obtained by multiplying the integrated value of the deviation value by a constant Ki. Then, the controller 10 outputs an instruction signal to be used to steer the rear wheel according to a value obtained by adding the above-calculated three values to each other. In this manner, although the position of the motor is controlled by various methods, the steering angle of the rear wheel is capable of following the set target steering angle of the rear wheel.

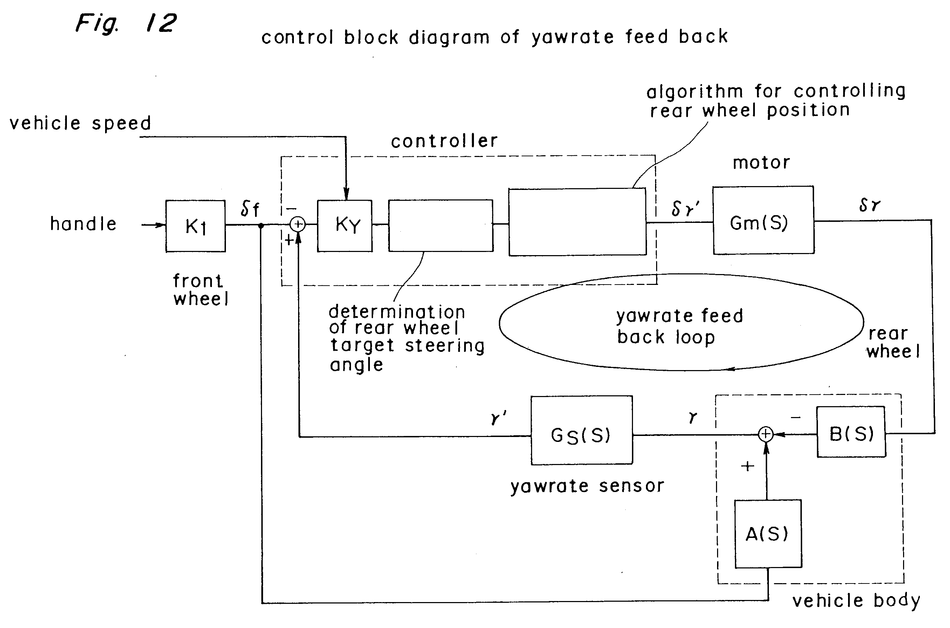

Fig. 12 is a schematic block diagram showing the feedback control flow of the yaw rate. The target steering angle of the rear wheel is determined based on the vehicle speed, the handle angle, and the yaw rate. The target steering angle of the rear wheel and the position of the rear wheel obtained from the motor position detector 17 are compared with each other. If there is a deviation between the target steering angle of the rear wheel and the position of the rear wheel, the rear wheel is steered in the direction in which the deviation decreases, according to the deviation via the electric motor or the control algorithm of controlling the position of the rear wheel. Although control is made so that the rear wheel follows the target steering angle thereof, the stability of the control is lost and thus a self-oscillation occurs depending on the characteristic of such as the controller, the electric motor, the vehicle body or the yaw rate sensor all constituting the feedback loop.

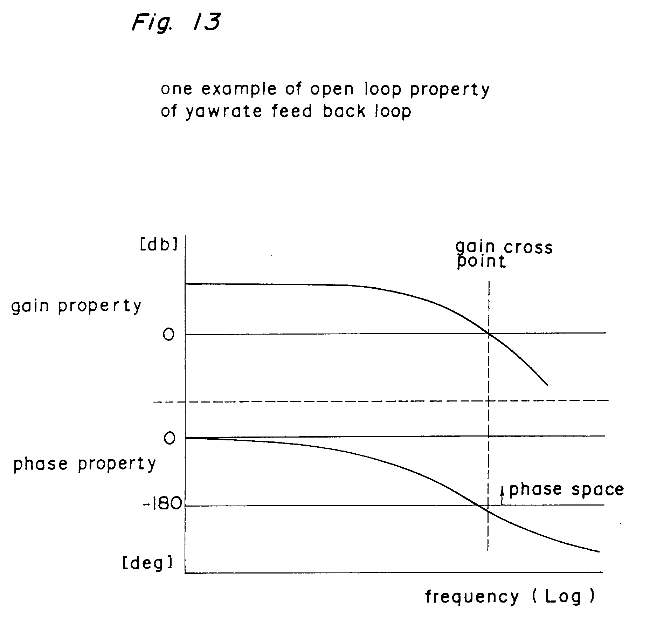

Fig. 13 shows an example of an open loop characteristic of the yaw rate feedback loop. In order to stabilize the feedback control, it is necessary that a phase margin (deviation between maximum phase delay and -180°) at a gain crossover frequency (gain = 0db) is higher than 30°.

The above-described conventional apparatuses have, however, the following problems.

In controlling the steering angle $\theta$r of the rear wheel by using equation 1, the second term of equation 1 becomes greater in proportion to the vehicle speed V. If the yaw rate is generated by an external factor such as side wind when the vehicle is traveling at a speed as high as greater than 90km/h, the rear wheel oscillates. This is because when the vehicle speed becomes high, the gain crossover frequency shown in Fig. 13 moves to a higher frequency and thus the phase margin cannot be maintained at an appropriate range.

In order to overcome this problem, the proportional constant Kr of the second term of equation 1 is reduced when the vehicle speed V becomes higher. That is, it is considered that the proportional gain of the yaw rate is reduced with the increase of the vehicle speed. But when the proportional constant Kr is reduced with the increase in the vehicle speed V, the angle of side-slip becomes great when the vehicle changes a lane during a high speed travel. Thus, an inappropriate travel direction of the vehicle cannot be smoothly corrected. In addition, tuning for determining the proportional gain takes a great amount of time.

## SUMMARY OF THE INVENTION

It is an object of the present invention to provide an apparatus for controlling the steering angle of the rear wheel of a four-wheel steering vehicle in which in a yaw rate feedback loop, the loop is stabilized by performing the feedback of the difference between a target yaw rate and an actual yaw rate, the position and speed of an electric motor and/or those of the rear wheel.

In accomplishing these and other objects of the present invention, as a first means, there is provided an apparatus, for controlling the steering angle of the rear wheel of a four-wheel steering vehicle, comprising: a vehicle speed sensor for detecting a vehicle speed; a yaw rate sensor for detecting a yaw rate; a handle angle sensor for detecting the rotational angle of the handle; a control device for outputting a signal for instructing the steering angle of the rear wheel in response to the signal of each sensor; an electric motor, incorporating a position detector, for steering the rear wheel based on the signal for instructing the steering angle of the rear wheel; and a detector for detecting the position of the rear wheel. In this construction, the control device subtracts the following four values A, B, C, and D from a target yaw rate of the vehicle set based on values detected by the vehicle speed sensor and the handle angle sensor:

value A: the product of an actual yaw rate of the vehicle detected by the yaw rate sensor and a constant;

value B: the product of the rate of change of the actual yaw rate and a constant;

value C: the product of a value, corresponding to the current position of the electric motor, detected by a detector for detecting the rotational position of the electric motor and a constant; and

value D: the product of the speed of the electric motor and a constant.

The electric motor is capable of following a target steering angle thus determined. In this manner, an early response can be obtained and the control device makes a control so that the actual yaw rate becomes equal to the target yaw rate.

As a second means, the control device subtracts the following four values A, B, C, and D from the target yaw rate of the vehicle set based on values detected by the vehicle speed sensor and the handle angle sensor:

value A: the product of the actual yaw rate of the vehicle detected by the yaw rate sensor and a constant;

value B: the product of the rate of change of the actual yaw rate and a constant;

value C: the product of a value, corresponding to the current position of the rear wheel, obtained from the detector for detecting the position of the rear wheel and a constant; and

value D: the product of the rate of change of the value corresponding to the current position of the rear wheel and a constant.

The electric motor is capable of following a target steering angle thus determined. In this manner, a high response can be obtained and the control device makes a control so that the actual yaw rate becomes equal to the target yaw rate.

As a third means, the control device subtracts the following six values A, B, C, D, E, and F from the target yaw rate of the vehicle set based on values detected by the vehicle speed sensor and the handle angle sensor:

value A: the product of the actual yaw rate of the vehicle detected by the yaw rate sensor and a constant;

value B: the product of the rate of change of the actual yaw rate and a constant;

value C: the product of a value, corresponding to the current position of the electric motor, detected by the detector for detecting the rotational position of the electric motor and a constant;

value D: the product of the speed of the electric motor and a constant;

value E: the product of a value, corresponding to the current position of the rear wheel, obtained from the detector for detecting the position of the rear wheel and a constant; and

value F: the product of the rate of change of the value corresponding to the current position of the rear wheel and a constant.

The electric motor is capable of following a target steering angle thus determined. In this manner, a high response can be obtained and the control device makes a control so that the actual yaw rate becomes equal to the target yaw rate..

As a fourth means, the value (constant) to be multiplied by the actual yaw rate of the vehicle detected by the yaw rate sensor and the value to be multiplied by the rate of change of the actual yaw rate are determined, respectively as a function of a vehicle speed.

As a fifth means, the control device sets a target yaw rate of the vehicle based on a vehicle speed detected by a vehicle speed sensor and the rotational angle of a handle detected by a handle angle sensor; calculates a proportional value by multiplying a deviation value between the set target yaw rate and the actual yaw rate detected by a yaw rate sensor by a constant Kp; a differential value by multiplying the change of rate of the deviation value by a constant Kd; an integral value by multiplying the integrated value of the deviation value by a constant Ki; and outputs a signal for instructing the steering angle of the rear wheel to an electric motor which steers the rear wheel according to a value obtained by adding the proportional value, the differential value, and the integral value to each other. In this construction, the constants Kp, Kd, and Ki are set according to a vehicle speed, respectively. In this manner, the phase of the yaw rate feedback loop can be appropriately compensated in an effective vehicle speed region.

As a six means, the control device sets each of the constants Kp, Kd, and Ki used in calculating the proportional value, the differential value, and the integral value according to the rotational angle of the handle or the steering angle of a front wheel detected by a sensor for detecting the steering angle of the front wheel. In this manner, the phase of the yaw rate feedback loop can be appropriately compensated when the front wheel is steered.

As a seventh means, the control device sets each of the constants Kp, Kd, and Ki used in calculating the proportional value, the differential value, and the integral value according to the steering angle of the rear wheel detected by a sensor for detecting the steering angle of the rear wheel or the rotational angle of the electric motor detected by the detector for detecting the rotational angle of the electric motor. In this manner, the phase of the yaw rate feedback loop can be appropriately compensated when the rear wheel is steered.

As an eighth means, the control device sets each of the constants Kp, Kd, and Ki used in calculating the proportional value, the differential value, and the integral value according to a friction coefficient $\mu$, between a tire and a road surface, detected by a sensor for detecting the friction coefficient $\mu$. In this manner, the phase of the yaw rate feedback loop can be appropriately compensated according to the state of the road surface.

As a ninth means, the control device sets each of the constants Kp, Kd, and Ki used in calculating the proportional value, the differential value, and the integral value by using at least two means according to the fifth means through the eighth means. In this manner, the phase of the yaw rate feedback loop can be appropriately compositely compensated.

As a tenth means, an apparatus for controlling the steering angle of the rear wheel of a four-wheel steering vehicle comprises: a vehicle speed sensor for detecting a vehicle speed; a yaw rate sensor for detecting a yaw rate; a handle angle sensor for detecting the rotational angle of a handle; a control device for outputting a signal for instructing the steering angle of the rear wheel in response to the signal of each sensor; and an electric motor, incorporating a position detector, for steering the rear wheel based on the signal for instructing the steering angle of the rear wheel. In this construction, in order to calculate a target steering angle of the rear wheel based on a value obtained by multiplying the yaw rate by a yaw rate constant determined by the vehicle speed, the control means comprises same phase-steering means for steering the rear wheel in the same phase as that of the front wheel; and opposite phase-steering means for steering the rear wheel in a phase opposite to that of the front wheel by using at least one of the product of a handle angle and a handle angle constant; the product of a differentiated value of the handle angle and a differential constant of the handle angle; and the product of an integrated value of the handle angle and an integral constant of the handle angle. In this construction, the handle angle constant, the differential constant of the handle angle, and the integral constant of the handle angle are determined by the yaw rate constant and the vehicle speed, respectively.

As an eleventh means, the control means has a low speed mode, for controlling the vehicle speed when the vehicle speed is smaller than $V_1$, in which the yaw rate constant is monotonously increased with respect to the vehicle speed, and the handle angle constant is fixed to a certain value; and a high speed mode, for controlling the vehicle speed when the vehicle speed is higher than $V_1$, in which the yaw rate constant is set to be smaller than the yaw rate constant to be set when the vehicle speed is smaller than V1. In this construction, the handle angle constant, the differential constant of the handle angle, and the integral constant of the handle angle are expressed in the form of a transfer function (linear expression)/(linear expression), respectively.

According to the first through fourth means, the position of the electric motor and/or that of the rear wheel are fed back before the actual yaw rate is generated. In this manner, the yaw rate feedback loop is stabilized and the response of the actual yaw rate to the target yaw rate can be improved.

According to the fifth means, the control device sets the target yaw rate of the vehicle based on both the vehicle speed detected by the vehicle speed sensor and the rotational angle of the handle detected by the handle angle sensor. Each of the constants Kp, Kd, and Ki used in finding the proportional value, the differential value, and the integral value is changeably determined according to the characteristic (expressed by loop transfer function) of the open loop of the yaw rate feedback loop in view of the fluctuation of the characteristic of the vehicle speed. Therefore, the characteristic of the closed loop of the yaw rate feedback loop can be appropriately compensated and thus the stability of yaw rate feedback loop can be improved.

According to the sixth means, the control device sets each of the constants Kp, Kd, and Ki used in calculating the proportional value, the differential value, and the integral value according to the rotational angle of the handle or the steering angle of the front wheel. Therefore, even though the characteristic of the vehicle is transiently changed by the steering of the front wheel, the characteristic of the closed loop of the yaw rate feedback loop can be appropriately compensated during the transient period of time and thus the stability of yaw rate feedback loop can be improved.

According to the seventh means, the control device sets each of the constants Kp, Kd, and Ki used in calculating the proportional value, the differential value, and the integral value according to the steering angle of the rear wheel or the rotational angle of the electric motor. Accordingly, the characteristic of the closed loop of the yaw rate feedback loop can be appropriately compensated against the nonlinear characteristic of the electric motor and that of the vehicle body which depend on the steering amount of the rear wheel and thus the stability of yaw rate feedback loop can be improved.

According to the eighth means, the control device sets each of the constants Kp, Kd, and Ki used in calculating the proportional value, the differential value, and the integral value according to a friction coefficient $\mu$ between a tire and a road surface. Therefore, even though the characteristic of the vehicle is changed by the state of the road surface, the characteristic of the closed loop of the yaw rate feedback loop can be appropriately improved (compensated) and thus the stability of yaw rate feedback loop can be improved.

According to the ninth means, the control device sets each of the constants Kp, Kd, and Ki used in calculating the proportional value, the differential value, and the integral value by using at least two means according to the fifth means through the eight means. Therefore, even though the characteristic of the open loop of the yaw rate feedback loop fluctuates, each of the constants Kp, Kd, and Ki is altered according to the change in the characteristic of the open loop. In this manner, the characteristic of the closed loop of the yaw rate feedback loop can be appropriately compensated and thus the stability of yaw rate feedback loop can be compositely improved.

According to the tenth means, the control device comprises the same phase component for steering the rear wheel in the same phase as that of the front wheel and the opposite phase component for steering the rear wheel in a phase opposite to that of the front wheel. The control device determines the same phase component as a function of the yaw rate of the vehicle; determines the yaw rate constant as a function of the vehicle speed; and determines the opposite phase component by using at least one of the product of the handle angle and the handle angle constant, the product of the differentiated value of the handle angle and the differential constant of the handle angle, and the product of the integrated value of the handle angle and the integral constant of the handle angle. Each of the constants used in determining the opposite phase component is set as a function of the vehicle speed. Thus, a gain with respect to the yaw rate at a high speed travel can be made to be small.

According to the eleventh means, since the gain (same phase component) of the yaw rate and the gain (opposite phase component) of the handle angle are determined at real time in consideration of the vehicle speed and the yaw rate, the rear wheel can be stably steered at even a high speed travel.

The advantage of the present invention is as follows: Even though the characteristic of the open loop is changed by a vehicle speed, the steering state of the front and rear wheels, the state of a road surface, and the nonlinear characteristic of the electric motor in the yaw rate feedback control for making the actual yaw rate coincident with the target yaw rate, the stability of the yaw rate feedback loop can be secured and can be improved finely. This is because the constant of the phase-compensating filter is altered depending on a cause.

Further, in the yaw rate feedback control for making the actual yaw rate coincident with the target yaw rate, the loop can be stabilized by performing the feedback of the yaw rate and the rate of change of the yaw rate, the position and speed of the electric motor and/or those of the rear wheel.

Furthermore, the gain of a vehicle speed and that of the yaw rate are calculated at real time in consideration of the vehicle speed and the yaw rate in calculating the target steering angle of the rear wheel. Therefore, it is unnecessary to perform a complicated tuning operation and thus the rear wheel can be favorably steered.

## BRIEF DESCRIPTION OF THE DRAWINGS

These and other objects and features of the present invention will become clear from the following description taken in conjunction with the preferred embodiments thereof with reference to the accompanying drawings, in which:

Fig. 1 is a schematic view showing an apparatus for controlling the steering angle of the rear wheel of a four-wheel steering vehicle according to a first embodiment of the present invention;

Fig. 1a is a flowchart showing the operation of an apparatus for controlling the steering angle of the rear wheel of a four-wheel steering vehicle according to the first embodiment of the present invention;

Fig. 2 is a schematic view showing an apparatus for controlling the steering angle of the rear wheel of a four-wheel steering vehicle according to a second embodiment of the present invention;

Fig. 3 is a schematic view showing an apparatus for controlling the steering angle of the rear wheel of a four-wheel steering vehicle according to a third embodiment of the present invention;

Fig. 4 is a graph indicating a transient response waveform of a rear wheel and an actual yaw rate with respect to a target yaw rate;

Fig. 5 is a schematic view showing an apparatus for controlling the steering angle of the rear wheel of a four-wheel steering vehicle according to a fourth embodiment of the present invention;

Fig. 6 is a schematic view showing an apparatus for controlling the steering angle of the rear wheel of a four-wheel steering vehicle according to a fifth embodiment of the present invention;

Fig. 7 is a schematic view showing an apparatus for controlling the steering angle of the rear wheel of a four-wheel steering vehicle according to a sixth embodiment of the present invention;

Fig. 8 is a schematic view showing an apparatus for controlling the steering angle of the rear wheel of a four-wheel steering vehicle according to a seventh embodiment of the present invention;

Fig. 9 is a graph showing an example of a map retrieval of a control constant;

Fig. 10 is a graph showing the relationship between a vehicle speed and the steering angle of a rear wheel;

Fig. 11 is a schematic view showing a conventional apparatus for controlling the steering angle of the rear wheel of a four-wheel steering vehicle;

Fig. 12 is a schematic view showing a control block of a yaw rate feedback;

Fig. 13 is a graph showing an example of the characteristic of an open loop of a yaw rate feedback loop;

Fig. 14 is a schematic view showing an apparatus for controlling the steering angle of the rear wheel of a four-wheel steering vehicle according to eighth and ninth embodiments of the present invention;

Fig. 15 is a flowchart showing the operation of an apparatus for controlling the steering angle of the rear wheel of a four-wheel steering vehicle according to the eighth and ninth embodiments of the present invention; and

Fig. 16 is a graph showing an example of a gain constant according to the ninth embodiments of the present invention.

## DETAILED DESCRIPTION OF THE INVENTION

Before the description of the present invention proceeds, it is to be noted that like parts are designated by like reference numerals throughout the accompanying drawings.

First embodiment:

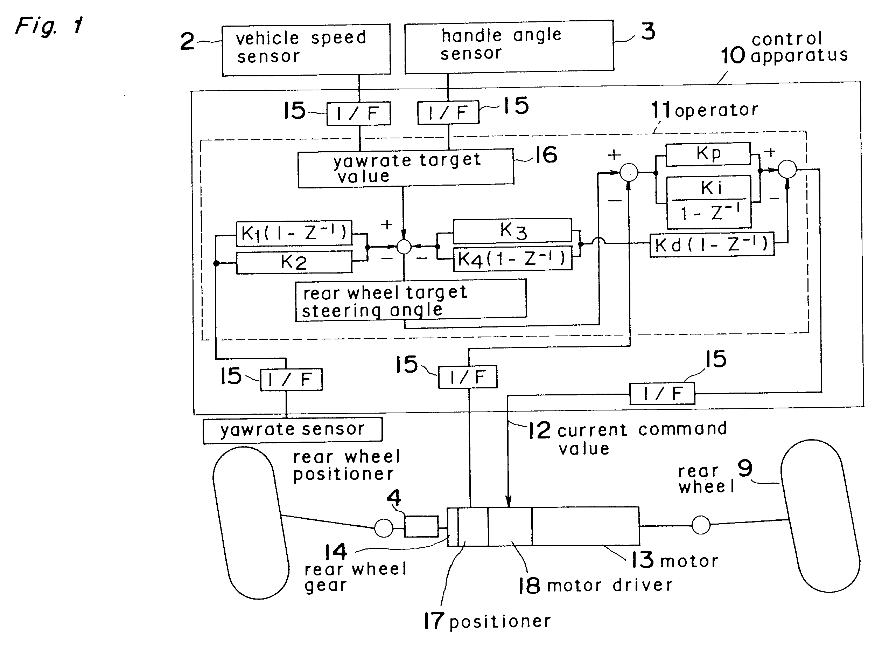

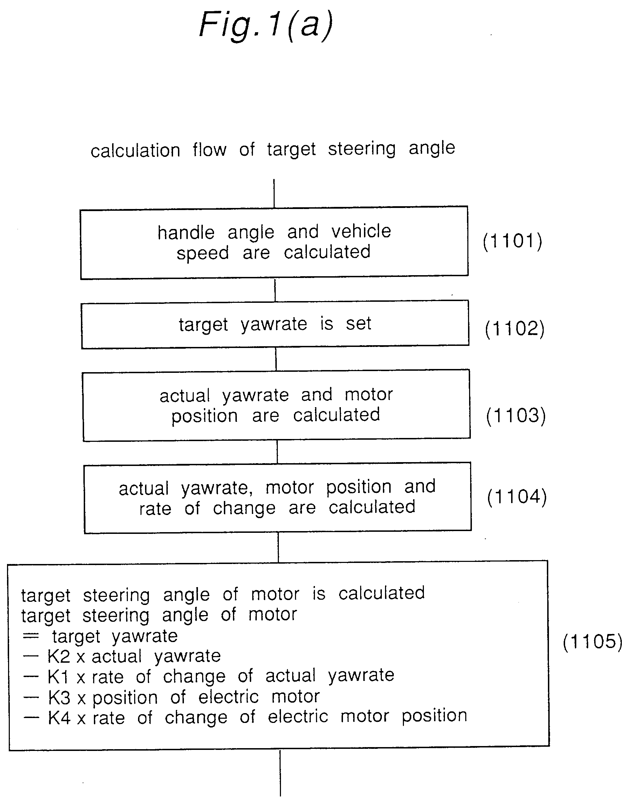

An apparatus for controlling the steering angle of the rear wheel of a four-wheel steering vehicle according to a first embodiment of the present invention is described below with reference to Fig. 1. A pair of rear wheels 9 is steered by using a motor driver 18 and an electric motor 13 via a rear wheel gear 14. A controller 10 comprises an interface circuit 15 for finding the current position of the motor by converting an analog value indicated by a position detector 17 installed on the motor 13 into a digital value; an interface circuit 15 for converting a signal detected by a handle angle sensor 3 and a signal detected by a yaw rate sensor 1 into a digital value, respectively; an interface circuit 15 of a vehicle speed sensor 2; and an interface circuit 15 for applying an electric current instruction value to the motor 13; and a calculator 11 for calculating the target steering angle of the rear wheel 9 and an electric current instruction value 12 to be applied to the motor driver 18 in response to these signals.

The algorithm of the calculator 11 is described below with reference to a flowchart shown in Fig. 1a. The calculator 11 calculates the target steering angle of the motor 13 for each sampling cycle. First, at step 1101, a current handle angle and vehicle speed are found based on the value inputted to the calculator 11 from each sensor. A target yaw rate to be generated by the vehicle is determined based on the input value of each sensor. In finding the target yaw rate at step 1102, information of an angular velocity of the handle or the like may be considered. The target yaw rate is converted from the unit of the input value of each sensor into the unit of the motor position. In order to determine the target steering angle of the rear wheel 9, namely, the target steering angle of the motor 13 with respect to the yaw rate, first, the vehicle yaw rate and the current position of the motor 13 are found based on the input value of each sensor at step 1103. At step 1104, the change of rate of the vehicle yaw rate and that of the motor position are found based on the yaw rate of the vehicle, the motor position, and a vehicle yaw rate one cycle before the current cycle. Then, the target position of the motor is found. At step 1105, the following four values are subtracted from the target yaw rate: The product of an actual yaw rate and a coefficient K2; the product of the rate of change of the actual yaw rate and a coefficient K1; the product of a value corresponding to the current position of the motor and a coefficient K3; and the product of the motor speed and a coefficient K4. Then, the value obtained by the above calculation is converted into the position of the motor 13. In this manner, the target steering angle of the motor 13 is found.

7

The control over the motor 13 is accomplished by a proportional control, an integral control, and a differential control as shown in Fig. 1 so that the operation of the motor 13 follows the target steering angle thereof.

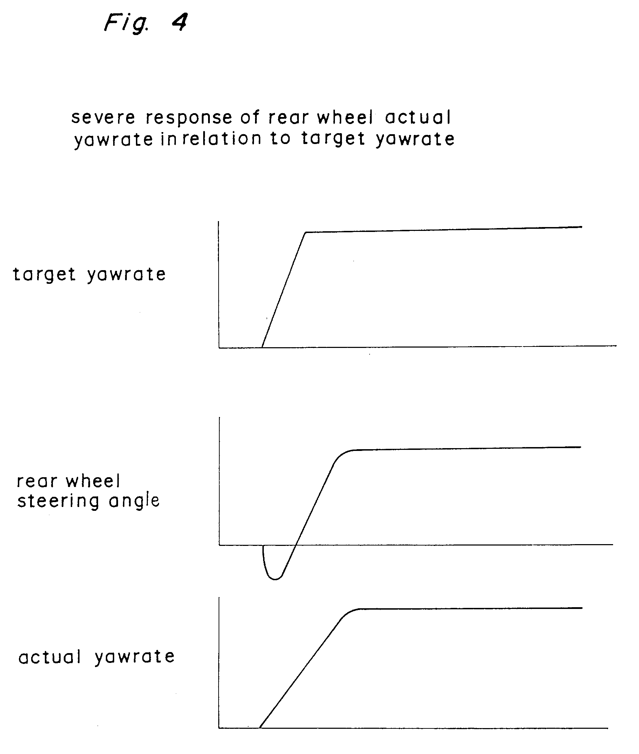

Fig. 4 shows the transient response waveform of the steering angle of the rear wheel and that of the actual yaw rate, with respect to the target yaw rate, obtained by the above calculation. That is, the response waveforms show the result obtained when the handle is rotated by 30° to the left when the vehicle is traveling straight at a speed of 100km/h. As a result of a lamp input of the rotational angle of the handle, a lamp input of the target yaw rate is executed. When the target steering angle of the motor 13 has been found with respect to the target yaw rate by the above calculation, the motor 13 follows the target steering angle thereof. Thus, the steering angle of the rear wheel is determined as shown in Fig. 4. That is, the rear wheel is steered in a phase opposite to that of the handle and then, in the same phase as that of the handle when the generation of the yaw rate starts in the vehicle. In this manner, the actual yaw rate coincides with the target yaw rate.

Second embodiment:

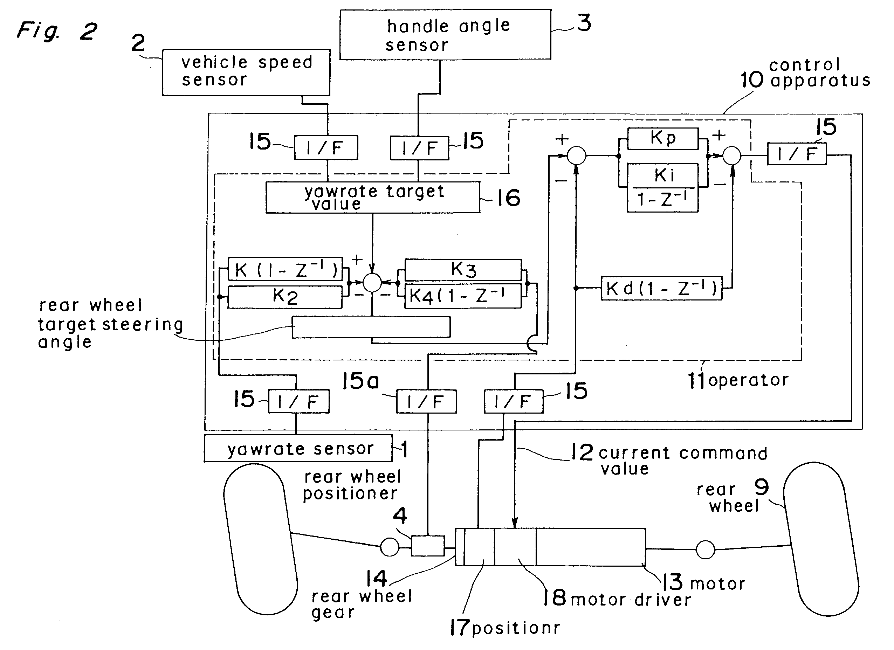

An apparatus for controlling the steering angle of the rear wheel of a four-wheel steering vehicle according to a second embodiment of the present invention is described below with reference to Fig. 2. In addition to the construction of the apparatus according to the first embodiment, the controller of the apparatus according to the second embodiment comprises a rear wheel position-detecting interface circuit 15a for processing a signal inputted thereto from the rear wheel position detector 4. The method for determining the target yaw rate is similar to that of the first embodiment.

The algorithm of the calculator 11 is described below. The target steering angle of the rear wheel, namely, the target steering angle of the motor 13 is determined with respect to the target yaw rate as follows. The following four values are subtracted from the target yaw rate: The product of the actual yaw rate detected by the yaw rate sensor and the coefficient K2; the product of the rate of change of the actual yaw rate and the coefficient K1; the product of a value, corresponding to the current position of the rear wheel, obtained from the rear wheel position detector and the coefficient K3; and the product of the difference value of the current position of the rear wheel and the coefficient K4. Then, the value obtained by the above calculation is converted into the position of the motor 13. In this manner, the target steering angle of the motor 13 is found.

Third embodiment:

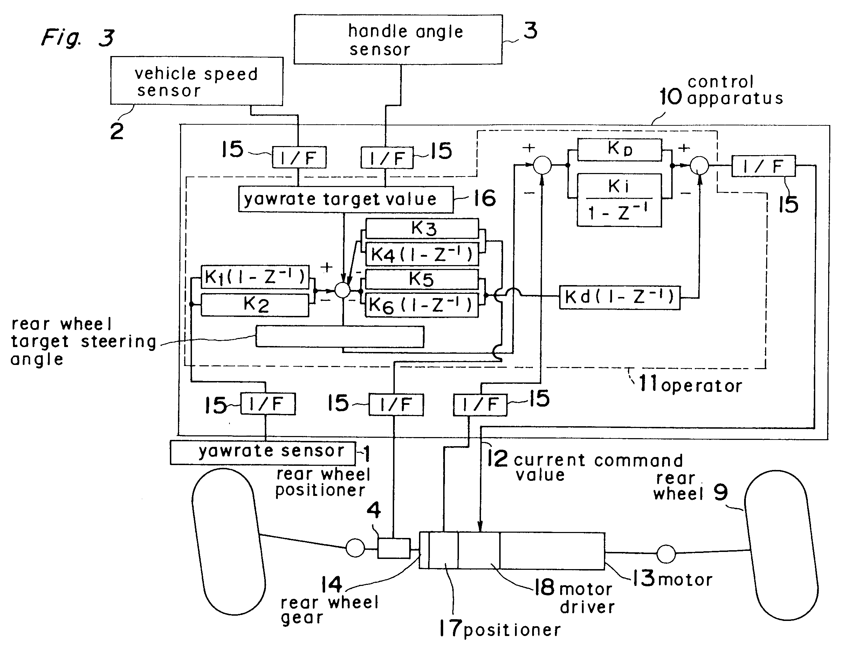

An apparatus for controlling the steering angle of the rear wheel of a four-wheel steering vehicle according to a third embodiment of the present invention is described below with reference to Fig. 3. The fundamental construction of the apparatus and the method for determining the target yaw rate according to the third embodiment are similar to those of the first and second embodiments.

The algorithm of the calculator 11 is described below. The target steering angle of the rear wheel, namely, the target steering angle of the motor 13 is determined with respect to the target yaw rate: The following six values are subtracted from the target yaw rate: The product of the actual yaw rate found from the yaw rate sensor and the coefficient K2; the product of the rate of change of the actual yaw rate and the coefficient K1; the product of a value, corresponding to the current position of the rear wheel, obtained from the rear wheel position detector and the coefficient K3; the product of the rate of change of the current position of the rear wheel and the coefficient K4; the product of a value, corresponding to the current position of the rear wheel, obtained from the rear wheel position detector and a coefficient K5; and the product of a motor speed and a coefficient K6. The value obtained by the above calculation is converted into the position of the motor 13. In this manner, the target steering angle of the motor 13 is found. A response delay due to the backlashes of the mechanisms such as the motor 13 or the steering angle of the rear wheel can be compensated by using this algorithm.

The vehicle is capable of traveling stably against disturbances such as side wind by making the following two coefficients proportional to a vehicle speed: the coefficient K2 which is to be multiplied by the actual yaw rate found from the yaw rate sensor 1, and the coefficient K1 which is to be multiplied by the rate of change of the actual yaw rate.

Fourth embodiment:

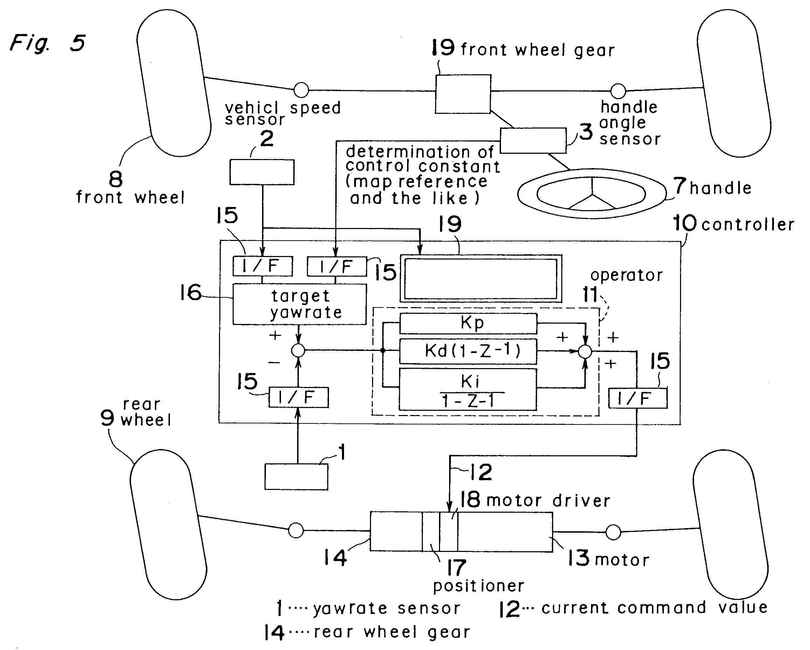

An apparatus for controlling the steering angle of the rear wheel of a four-wheel steering vehicle according to a fourth embodiment of the present invention is described below with reference to Fig. 5. A pair of front wheels 8 is steered by the rotation of a handle 7 via a front gear 19. A pair of front wheels 9 is steered by the motor 13 via a rear wheel gear 14 according to an instruction signal outputted from the controller 10. When the front wheel 8 or the rear wheel 9 is steered, a rotational motion is generated around the center of gravity of the vehicle and the angular velocity (yaw rate) of the rotation is detected by the yaw rate sensor 1. The vehicle speed detected by the vehicle speed sensor 2 and the rotational angle of the handle 7 detected by the handle angle sensor 3 are inputted to the controller 10 via the interface circuit 15. In response to the detected vehicle speed and handle angle, the controller 10 calculates the target yaw rate 16 required to improve the travel stability, thus outputting an electric current instruction signal used to steer the rear wheel 9 to the motor driver 18 so that the actual yaw rate detected by the yaw rate sensor 1 follows the target yaw rate 16.

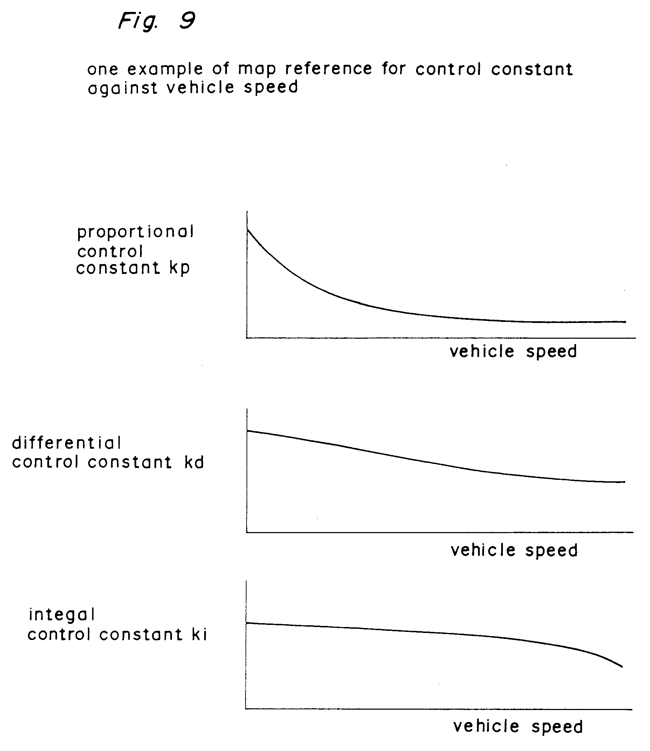

The controller 10 executes processing as follows: According to the fourth embodiment, the controller 10 sets the target yaw rate desired to be generated by the vehicle according to a vehicle speed and a handle angle for each sampling cycle and by using a map as shown in Fig. 9, retrieves each control constant to be used at real time in subsequent calculations for the actual vehicle speed. In addition, the controller 10 calculates a proportional value by multiplying a deviation value between the set target yaw rate and the actual yaw rate by a constant Kp; a differential value by multiplying the change of rate of the deviation value by a constant Kd; and an integral value by multiplying the integrated value of the deviation value by an integral control constant Ki. Then, the controller 10 outputs an instruction signal according to the sum of the above three values. The fluctuation of the vehicle characteristic which occurs due to a vehicle speed can be compensated by inserting a phase-compensating filter, for altering each control constant according to a vehicle speed, into a feedback loop. In this manner, the target yaw rate can be followed up by the actual yaw rate and the vehicle is capable of traveling stably.

Fifth embodiment:

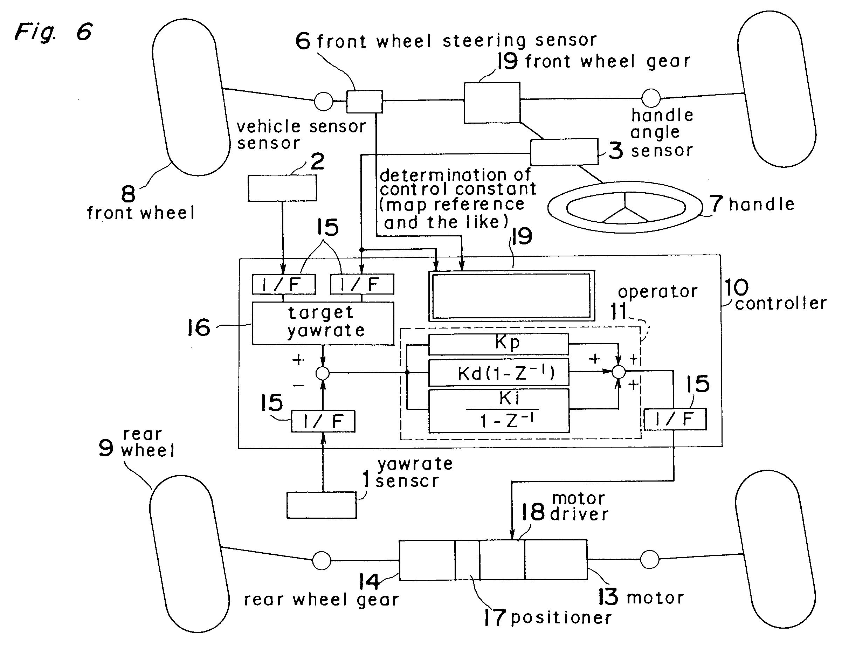

An apparatus for controlling the steering angle of the rear wheel of a four-wheel steering vehicle according to a fifth embodiment of the present invention is described below with reference to Fig. 6. The construction of the apparatus and processing method according to the fifth embodiment are similar to those of the fourth embodiment except that the retrieval of each constant Kp, Kd, and Ki is performed in terms of a handle angle instead of a vehicle speed.

Referring to a control block diagram of Fig. 12, when a handle is steered, the characteristic of the entire yaw rate feedback loop fluctuates because the vehicle characteristic is greatly affected by a front wheel component. Therefore, each control constant is altered according to a handle angle in consideration of not only the stability in a straight drive, but also a lane change, right and left turns, and the improvement in steering performance on a curve.

The vehicle characteristic is changed directly by the steering angle of the front wheel. Therefore, the same effect can be obtained by the change of each control constant made according to the steering angle of the front wheel by means of the front wheel steering angle sensor.

Sixth embodiment:

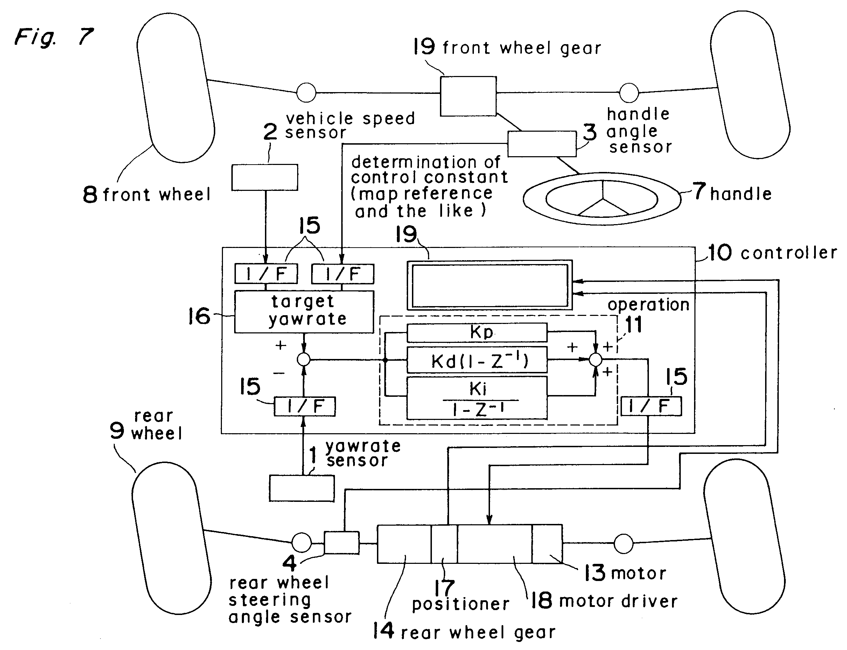

An apparatus for controlling the steering angle of the rear wheel of a four-wheel steering vehicle according to a sixth embodiment of the present invention is described below with reference to Fig. 7.

The construction of the apparatus and the processing method according to the fifth embodiment are similar to those of the fifth embodiment except that the apparatus has the steering angle of the rear wheel additionally and the retrieval of each constant Kp, Kd, and Ki is performed in terms of the steering angle of the rear wheel instead of a vehicle speed.

The mechanical characteristic of an electric current limiter of the motor 13 and that of the rear wheel 9 are nonlinear. Therefore, the characteristic of the motor 13 and that of the vehicle body are changed by the steering degree of the rear wheel. Accordingly, in order to compensate the fluctuation of the stability brought about by such a nonlinear element, each control constant is changed according to the steering angle of the rear wheel.

In this case, the same effect can be obtained by altering each control constant according to the rotational angle of the motor 13 based on the result detected by an encoder which detects the rotational angle of the motor 13 mechanically connected with the rear wheel 9.

Seventh embodiment:

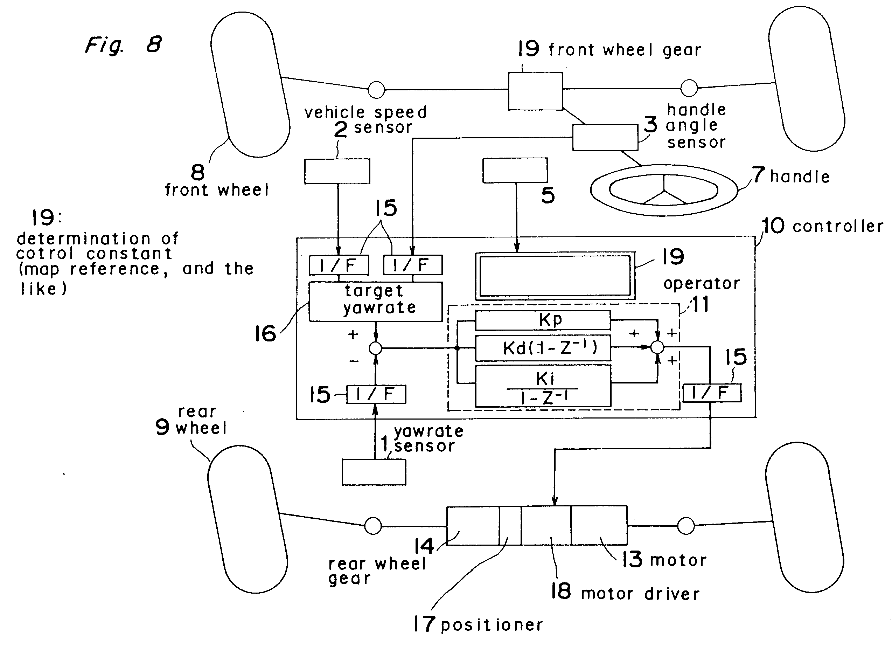

An apparatus for controlling the steering angle of the rear wheel of a four-wheel steering vehicle according to a seventh embodiment of the present invention is described below with reference to Fig. 8. The construction of the apparatus and the processing method according to the seventh embodiment is similar to those of the fifth embodiment except that the apparatus has a sensor for detecting the coefficient $\mu$ of dynamic friction between a tire and a road surface and each of the control constants Kp, Kd, and Ki is retrieved by the coefficient $\mu$ instead of a vehicle speed.

Similarly to the fourth embodiment, the characteristic of the vehicle is changed by the state (vehicle speed) of the vehicle as well as the state of the road surface. That is, cornering power generated according to the coefficient $\mu$ increases or decreases, which changes the characteristic of the vehicle. Therefore, in the seventh embodiment, each of the control constants is altered according to the coefficient $\mu$ in consideration of the change in the characteristic of the vehicle changed according to weather (fine, rain) or the condition of the road surface (asphalt, cement, gravel).

A road freeze sensor, an atmospheric temperature sensor, and an acceleration sensor (convex/concave of road surface) can be utilized as sensors for detecting the coefficient $\mu$. These sensors are used in combination to assume the coefficient $\mu$.

An integrated stability of control, travel stability, and travel safety can be improved by using the first embodiment through the seventh embodiment in combination.

Eighth embodiment:

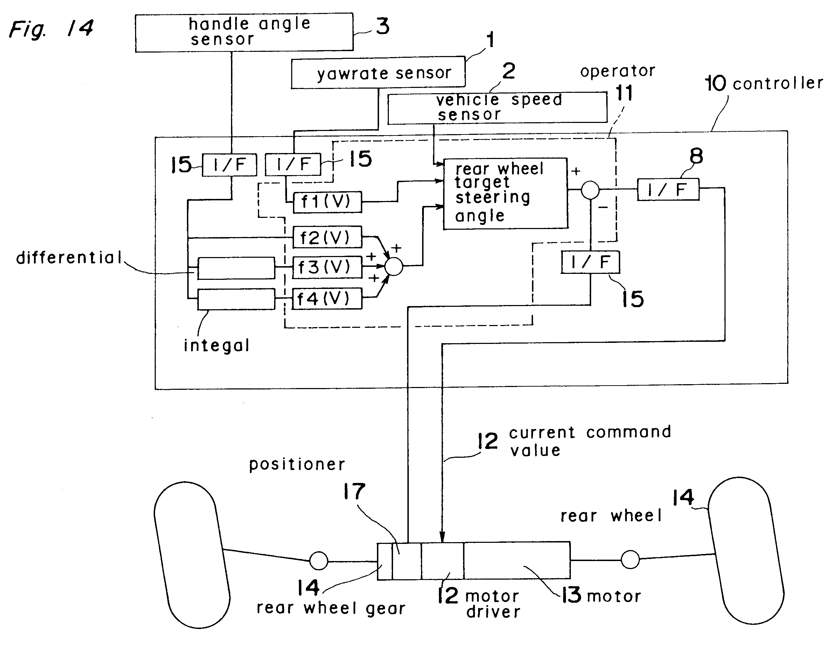

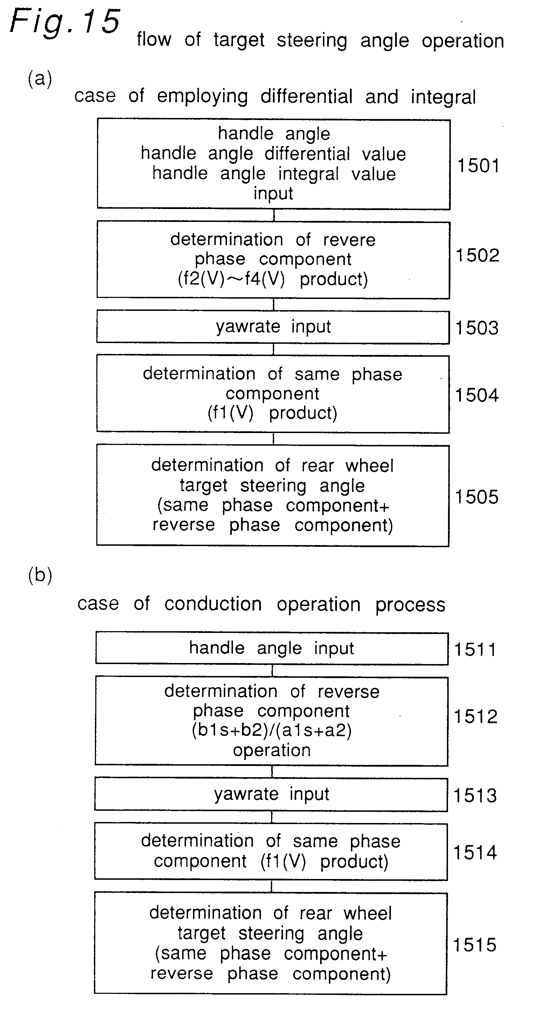

An apparatus for controlling the steering angle of the rear wheel of a four-wheel steering vehicle according to an eighth embodiment of the present invention is described below with reference to Figs. 14 and 15.

The elimination of an unstable behavior which occurs in determining the steering angle $\theta r$ of the rear wheel in a high speed travel is intended by the eighth embodiment by using an equation 1 shown below.

$$\theta r = -kf \times \theta f + kr \times V \times Y \qquad (1)$$

where kf, kr: proportional constant (k > 0), V: vehicle speed, Y: yaw rate of vehicle.

The apparatus according to the eighth embodiment comprises the yaw rate sensor 1; the vehicle speed sensor 2 for detecting the speed of the vehicle; and the yaw rate detecting sensor 3 for detecting the yaw rate. Signals outputted from each sensor is inputted to the controller 10 via the interface circuit 15. The controller 10 outputs an instruction signal indicating the steering angle of the rear wheel in response to signals outputted from each sensor. The motor 13, incorporating a position detector for detecting the rotational angle thereof, steers the rear wheel based on the instruction signal outputted from the controller 10. The controller 10 calculates the target steering angle of the rear wheel by setting the product of the yaw rate of the vehicle and yaw rate constant f1(v) as a same phase steering component adapted for steering the rear wheel and the front wheel in the same phase. The controller 10 also calculates the target steering angle of the rear wheel as an opposite phase steering component for steering the rear wheel in a phase opposite to that of the front wheel by using at least one of the product of a handle angle and a handle angle constant f2(v); the product of the differentiated value of the handle angle and the differential constant f3(v) of the handle angle; and the product of the integrated value of the handle angle and the integral constant f4(v) of the handle angle. The handle angle constant f2(v), the handle angle differential constant f3(v), and the handle angle integral constant f4(v) are determined by the yaw rate constant and a vehicle speed, respectively.

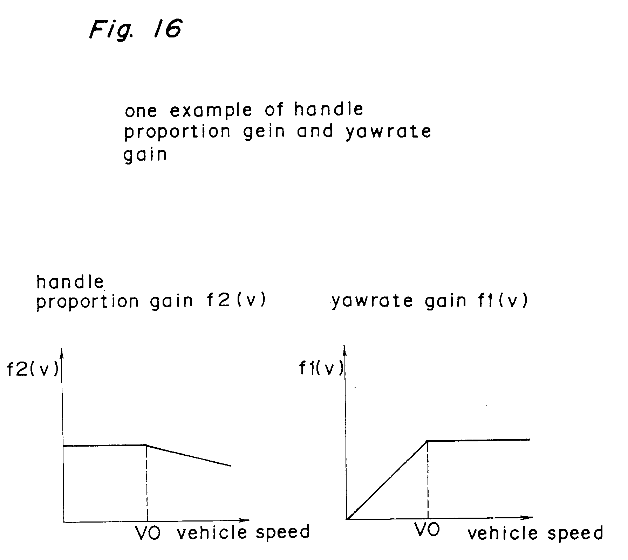

The operation of the eighth embodiment is described below with reference to a flowchart shown in Fig. 15a. At step 1501, a handle angle is detected. In addition, the handle angle differential value and the handle angle integral value are detected by using a differentiator and an integrator, respectively. Then, the program goes to step 1502 at which an opposite phase component to be used by the controller 10 which calculates the target steering angle of the rear wheel is determined. In order to determine the opposite phase component, the handle angle constant f2(v), the handle angle differential constant f3(v), and the handle angle integral constant f4(v) are integrated with respect to each output. These constants f1(v) through f4(v) to be determined by each vehicle speed V may be appropriately found from a monotonous increasing function or a monotonous decreasing function. These functions may be determined from experimental results. An example of the handle angle constant f2(v) and that of the yaw rate constant f1(v) are shown in Fig. 16.

Then, the program goes to step 1503 at which the yaw rate of the vehicle is calculated by the output of the yaw rate sensor 3 and inputted to the controller 10. Then, the program goes to step 1504 at which the same phase component is calculated from the yaw rate inputted to the controller 10. Similarly to the calculation of the opposite phase component, the same phase component is determined after integrating the yaw rate constant f1(v). Then, the program goes to step 1505 at which the target steering angle of the rear wheel is determined. The target steering angle of the rear wheel is found by adding the opposite phase component found at step 1502 and the same phase component found at step 1504 to each other.

When the target steering angle of the rear wheel has been determined in this manner, the controller 10 outputs an electric current instruction signal to the motor 13 so that the operation position of the motor 13 coincides with the target steering angle of the rear wheel. The controller 10 controls the motor 13 by executing a feedback with the position detector 20 detecting the position of the motor 13. The motor 13 may be easily controlled in combination of the method, according to the fourth embodiment, which uses the phase-compensating filter.

As described above, according to the eighth embodiment, in order to determine the target steering angle in steering the rear wheel, the same phase component for steering the rear wheel and the front wheel in the same phase and the opposite phase component for steering the rear wheel in the phase opposite to that of the front wheel are used. The same phase component is determined as a function of the yaw rate of the vehicle; the yaw rate constant is determined as a function of the vehicle speed V; and the opposite phase component is determined by using at least one of the handle angle, the differentiated value of the handle angle, and the integrated value of the handle angle. Since the constant in determining the opposite phase component is a function of the vehicle speed V, the gain with respect to the yaw rate in a high speed travel can be made to be small and thus, a stable steering of the rear wheel can be accomplished in a high speed travel.

Ninth embodiment:

An apparatus for controlling the steering angle of the rear wheel of a four-wheel steering vehicle according to a ninth embodiment of the present invention is described below with reference to Fig. 14, 15, and 16. Similarly to the eighth embodiment, in order to stabilize the steering of the rear wheel in a high speed travel, the yaw rate constant is determined as a function of a vehicle speed V. It is an object of the ninth embodiment to eliminate the influence of yaw rate constant on the angle of side-slip. That is, the opposite phase proportional gain kf is changed with the change of the yaw rate gain kr of equation 1 so as to obtain an ideal turn (angle of side-slip is zero) of the vehicle.

An unstable behavior in a high speed travel will be analyzed below. The behavior in a lane change is a serious problem in steering the rear wheel in a high speed travel. The influence of the behavior which occurs in the lane change on the angle of side-slip is investigated below when the yaw rate gain kr is reduced with the decrease of a vehicle speed.

The investigation is made on a two-wheeled vehicle.

The equation of motion of the two-wheeled vehicle is shown below.

$$\begin{bmatrix} \beta \\ \dot{\gamma} \end{bmatrix} = \begin{bmatrix} a11 & a12 \\ a21 & a22 \end{bmatrix} \begin{bmatrix} \beta \\ \gamma \end{bmatrix} + \begin{bmatrix} b1 \\ b2 \end{bmatrix} \theta R + \begin{bmatrix} c1 \\ c2 \end{bmatrix} \theta F \quad (2)$$

$a11 = -(CF + CR)/mv$, $a21 = -(aCF-bCR)/I$, $a12 = -(mv^2 + aCF-bCR)/mv^2$ $a22 = -(a^2CF + b^2CR)/Iv$
$b1 = CR/mv$, $b2 = -bCR/I$, $c1 = CR/mv$, $c2 = aCF/I$

| | |
|---|---|
| m: | vehicle weight |
| I: | yaw inertia moment |
| a: | distance between front shaft and centroid |
| b: | distance between rear shaft and centroid |
| L: | wheel base = a + b |
| CF: | sum of front wheel cornering power for two wheels |

11

CR: sum of rear wheel cornering power for two wheels
$\theta$F: real steering angle
$\theta$R: real steering angle
V: vehicle speed (m/s)
$\gamma$: yaw angle speed
$\beta$: vehicle body sliding angle at center of gravity

Equation 3 is obtained by substituting $\theta r = -kf \times \theta f + kr \times V \times Y$ for equation 2 and rearranging the equation 2.

$$\begin{bmatrix} s-a11 & -a12-b1Kr \\ -a21 & s-a22-b2Kr \end{bmatrix}\begin{bmatrix} \beta \\ \gamma \end{bmatrix} = \begin{bmatrix} b1KF+c1 \\ b2KF+c2 \end{bmatrix}\theta F$$

(3)

Equation 4 is obtained by using $\Delta$ for the matrix of the left side [ ] of equation 3.

$$\frac{\beta}{\delta F} = \frac{1}{\Delta}\begin{vmatrix} b1KF+c1 & -a12-b1K \\ b2KF+c2 & s-a22-b2K \end{vmatrix}$$

(4)

Equation 5 is obtained by using A for the matrix : : of the left side of equation 4.

A = (b1KF + c1)(s-a22-b2KR)-(b2KF + c2)(-a12-b1KR)    (5)

In order to establish $\beta$ = 0, the following equation 6 is required.
Equation 7 is shown below.

$$KF = -\frac{C_1 S + a_{12} \cdot C_2 - a_{22} \cdot C1 + K_{13}(b_1 C_2 - b_2 C_1)}{b_1 S + a_{12} \cdot b_2 a_{22} \cdot b_1}$$

(6)

$$b_1 = A_1, \quad a_{12}b_{12} - a_{22}b_1 = A_2,$$
$$C_1 = B_1, \quad A_{12}C_2 - a_{22}C_1 + KR(b_1 C_2 - b_2 C_1) = B_2$$

$$KF = -\frac{B_1 S + B_2}{A_1 S + A_2}$$

(7)

That is, expressing the proportional constant kf of the opposite phase in the form of a transfer function (linear expression)/(linear expression), theoretically, the angle of side-slip = 0.

Supposing that the vehicle of 2,000 cc travels at a speed of 100km/h and proportional constant kr = 0.5, the proportional constant kf is as follows:

Supposing that m = 1,400kg, CF = Cr = 85,000 N/rad, a = 1.1m, b = 1.5m, and 1 = 1,800kgm², each of the constants of equation 7 is found as follows:

$A_1$ = 2.19, $A_2$ = 81.5, $B_1$ = 2.19, $B_2$ = -37.4

The ninth embodiment is constituted based on the theory described above. The construction of the apparatus according to the ninth embodiment is similar to that of the apparatus according to the eighth embodiment shown in Fig. 14. The function of each component of the apparatus is also similar to that of the apparatus according to the eighth embodiment. The operation of the controller 10, according to the ninth embodiment, which is different from that of the eighth embodiment is described below. The controller 10 has a low speed mode for controlling the vehicle speed when the vehicle speed is smaller than $V_1$ and a high speed mode for controlling the vehicle speed when the vehicle speed is higher than $V_1$. In the low speed mode, the yaw rate constant kr is monotonously increased with respect to the vehicle speed and the handle angle constant kf is fixed to a certain value. That is, based on equation 1, a conventional control method is used because in the low speed mode, the yaw rate gain is not so high and an unstable behavior such as the oscillation of the rear wheel does not occur even though the yaw rate is generated by an external factor such as side wind. In the high speed mode, based on the above-described theory, the yaw rate constant kr is set to be smaller than the yaw rate constant to be set when the vehicle speed is smaller than $V_1$, and the opposite phase component constant kf is determined by equation 7.

As described previously, the vehicle of 2,000 cc traveling at a speed of 100km/h is used for investigation. Each constant is as follows:

$A_1 = 2.19$, $A_2 = 81.5$, $B_1 = 2.19$, $B_2 = -37.4$

The operation of the ninth embodiment is described below with reference to a flowchart shown in Fig. 15b. At step 1511, the controller 10 reads the handle angle from the handle angle sensor 1. Then, the program goes to step 1512 at which the opposite phase component constant kf is calculated by using equation 7, and the opposite phase component constant kf is integrated with respect to the handle angle so as to find the opposite phase component. At step 1513, the yaw rate is read, and at step 1514, the same phase component constant f1 (v) (yaw rate constant) is determined and the opposite phase component is found similarly. Then, the program goes to step 1515 at which the same phase component and the opposite phase component are added to each other to determine the target steering angle of the rear wheel. Since the subsequent operations are similar to those of the embodiments described previously, the description thereof is omitted herein.

As described above, in the ninth embodiment, in determining the steering angle of the rear wheel, the gain (same phase component) of the yaw rate and the gain (opposite phase component) of the handle angle are determined at real time in consideration of the vehicle speed and the yaw rate. Therefore, a stable steering of the rear wheel can be accomplished at a high speed travel. In addition, the gain of the opposite phase component is determined at real time based on equation 7. Therefore, even though the apparatus of the present invention is installed on various types of vehicles, the steering of the rear wheel can be favorably controlled without carrying out a complicate tuning.

In addition to the handle angle, the differential value of the handle angle or the integral value thereof or the combination thereof may be used as the opposite phase component.

The above-described embodiments may be constructed by a hardware, but may be achieved by a CPU based on a program stored in a memory.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An apparatus for controlling the steering angle of the rear wheel of a four-wheel steering vehicle comprising: a vehicle speed sensor for detecting a vehicle speed; a yaw rate sensor for detecting a yaw rate; a handle angle sensor for detecting the rotational angle of the handle; a control device for outputting a signal for instructing the steering angle of the rear wheel in response to the signal of each sensor; an electric motor, incorporating a position detector, for steering the rear wheel based on the signal for instructing the steering angle of the rear wheel; and a detector for detecting the position of the rear wheel, in which:

    the control device subtracts the following four values A, B, C, and D from a target yaw rate of the vehicle set based on values detected by the vehicle speed sensor and the handle angle sensor:

    value A: the product of an actual yaw rate of the vehicle detected by the yaw rate sensor and a constant;

    value B: the product of the rate of change of the actual yaw rate and a constant;

    value C: the product of a value, corresponding to the current position of the electric motor, obtained from the position detector of the electric motor and a constant; and

    value D: the product of the speed of the electric motor and a constant,

whereby a target steering angle of the electric motor is found.

2. An apparatus as defined in claim 1, in which:

the control device subtracts the following four values A, B, C, and D from the target yaw rate of the vehicle set based on values detected by the vehicle speed sensor and the handle angle sensor:

value A: the product of the actual yaw rate of the vehicle detected by the yaw rate sensor and a constant;

value B: the product of the rate of change of the actual yaw rate and a constant;

value C: the product of a value, corresponding to the current position of the rear wheel, obtained from the detector for detecting the position of the rear wheel and a constant; and

value D: the product of the rate of change of the value corresponding to the current position of the rear wheel and a constant,

whereby the target steering angle of the electric motor is found.

3. An apparatus as defined in claim 1, in which:

the control device subtracts the following six values A, B, C, D, E, and F from the target yaw rate of the vehicle set based on values detected by the vehicle speed sensor and the handle angle sensor:

value A: the product of the actual yaw rate of the vehicle detected by the yaw rate sensor and a constant;

value B: the product of the rate of change of the actual yaw rate and a constant;

value C: the product of a value, corresponding to the current position of the electric motor, obtained from position detector of the electric motor and a constant;

value D: the product of the speed of the electric motor and a constant;

value E: the product of a value, corresponding to the current position of the rear wheel, obtained from the detector for detecting the position of the rear wheel and a constant; and

value F: the product of the rate of change of the value corresponding to the current position of the rear wheel and a constant,

whereby the target steering angle of the electric motor is found.

4. An apparatus as defined in any one of claims 1, 2 and 3 in which: the value to be multiplied by the actual yaw rate of the vehicle detected by the yaw rate sensor and the value to be multiplied by the rate of change of the actual yaw rate are determined, respectively as a function of a vehicle speed.

5. An apparatus for controlling the steering angle of the rear wheel of a four-wheel steering vehicle comprising a control device which sets a target yaw rate of the vehicle based on a vehicle speed detected by a vehicle speed sensor and the rotational angle of a handle detected by a handle angle sensor; calculates a proportional value by multiplying a deviation value between the set target yaw rate and the actual yaw rate detected by a yaw rate sensor by a constant Kp; a differential value by multiplying the change of rate of the deviation value by a constant Kd; an integral value by multiplying the integrated value of the deviation value by a constant Ki; and outputs a signal for instructing the steering angle of the rear wheel to an electric motor which steers the rear wheel according to a value obtained by adding the proportional value, the differential value, and the integral value to each other, in which: the constants Kp, Kd, and Ki are set according to a vehicle speed, respectively.

6. An apparatus as defined in claim 5, wherein the control device sets each of the constants Kp, Kd, and Ki used in calculating the proportional value, the differential value, and the integral value according to the rotational angle of the handle or the steering angle of a front wheel connected with the handle via a gear and other components.

7. An apparatus as defined in claim 5, wherein the control device sets each of the constants Kp, Kd, and Ki used in calculating the proportional value, the differential value, and the integral value according to the steering angle of the rear wheel detected by a sensor for detecting the steering angle of the rear wheel or the rotational angle of the electric motor connected with the rear wheel via a gear and other components.

8. An apparatus as defined in claim 5, wherein the control device sets each of the constants Kp, Kd, and Ki used in calculating the proportional value, the differential value, and the integral value according to a friction coefficient $\mu$, between a tire and a road surface, detected by a sensor for detecting the friction

coefficient μ.

9. An apparatus as defined in claim 5, wherein the control device sets each of the constants Kp, Kd, and Ki used in calculating the proportional value, the differential value, and the integral value by using at least two means according to claim 5 through 8.

10. An apparatus for controlling the steering angle of the rear wheel of a four-wheel steering vehicle comprising: a vehicle speed sensor for detecting a vehicle speed; a yaw rate sensor for detecting a yaw rate; a handle angle sensor for detecting the rotational angle of a handle; a control device for outputting a signal for instructing the steering angle of the rear wheel in response to the signal of each sensor; and an electric motor, incorporating a position detector, for steering the rear wheel based on the signal for instructing the steering angle of the rear wheel, in which:

in order to calculate a target steering angle of the rear wheel based on a value obtained by multiplying the yaw rate by a yaw rate constant determined by the vehicle speed, the control means comprises same phase-steering means for steering the rear wheel in the same phase as that of the front wheel; and opposite phase-steering means for steering the rear wheel in a phase opposite to that of the front wheel by using at least one of the product of a handle angle and a handle angle constant; the product of a differentiated value of the handle angle and a differential constant of the handle angle; and the product of an integrated value of the handle angle and an integral constant of the handle angle, in which:

the handle angle constant, the differential constant of the handle angle, and the integral constant of the handle angle are determined by the yaw rate constant and the vehicle speed, respectively.

11. An apparatus as defined in claim 10, wherein the control means has a low speed mode, for controlling the vehicle speed when the vehicle speed is smaller than $V_1$, in which the yaw rate constant is monotonously increased with respect to the vehicle speed, and the handle angle constant is fixed to a certain value; and a high speed mode, for controlling the vehicle speed when the vehicle speed is higher than $V_1$, in which the yaw rate constant is set to be smaller than the yaw rate constant to be set when the vehicle speed is smaller than V1, in which:

the handle angle constant, the differential constant of the handle angle, and the integral constant of the handle angle are expressed in the form of a transfer function (linear expression)/(linear expression), respectively.

Fig. 1

2 — vehicle speed sensor

3 — handle angle sensor

10 control apparatus

15 — I/F    I/F — 15

11 operator

yawrate target value — 16

$K_p$

$\dfrac{K_i}{1 - Z^{-1}}$

$K_1(1 - Z^{-1})$

$K_2$

$K_3$

$K_4(1 - Z^{-1})$

$K_d(1 - Z^{-1})$

rear wheel target steering angle

15 — I/F    15 — I/F    I/F — 15

yawrate sensor

12 current command value

rear wheel positioner

rear wheel 9

4

14 rear wheel gear

13 motor

18 motor driver

17 positioner

EP 0 551 891 A2

# Fig.1(a)

calculation flow of target steering angle

| handle angle and vehicle speed are calculated | (1101) |

| target yawrate is set | (1102) |

| actual yawrate and motor position are calculated | (1103) |

| actual yawrate, motor position and rate of change are calculated | (1104) |

target steering angle of motor is calculated
target steering angle of motor
= target yawrate
— K2 x actual yawrate
— K1 x rate of change of actual yawrate
— K3 x position of electric motor
— K4 x rate of change of electric motor position

(1105)

17

Fig. 2

EP 0 551 891 A2

Fig. 3

vehicle speed sensor — 2

handle angle sensor — 3

10 control apparatus

15 — I/F    I/F — 15

yawrate target value — 16

$K_D$

$\dfrac{K_i}{1-Z^{-1}}$

I/F — 15

$K_3$
$K_4(1-Z^{-1})$
$K_5$
$K_6(1-Z^{-1})$

$K_1(1-Z^{-1})$
$K_2$

$K_d(1-Z^{-1})$

rear wheel target steering angle

11 operator

15 — I/F    15 — I/F    I/F — 15

yawrate sensor — 1
rear wheel positioner

12 current command value

rear wheel 9

4

14 rear wheel gear

18 motor driver

13 motor

17 positioner

EP 0 551 891 A2

## Fig. 4

severe response of rear wheel actual
yawrate in relation to target yawrate

target yawrate

rear wheel
steering angle

actual yawrate

Fig. 5

19 front wheel gear

vehicl speed sensor
2

handle angle sensor 3

determination of control constant (map reference and the like)

7 handle

8 front wheel

15

19

10 controller

I/F    I/F   15

operator

16   target yawrate

11

+    −

Kp

Kd(1−Z⁻¹)

$\dfrac{Ki}{1-Z^{-1}}$

+    +    +

15

15   I/F

I/F

rear wheel 9

1

12

18 motor driver

14    17

13 motor

positioner

1····yawrate sensor     12···current command value
14····rear wheel gear

EP 0 551 891 A2

*Fig. 6*

6 front wheel steering sensor

19 front wheel gear

vehicle sensor sensor

8 front wheel

2

determination of control constant (map reference and the like)

handle angle 3 sensor

7 handle

15

19

I/F    I/F

operator    10 controller

11

16    target yawrate

Kp

+
−

Kd(1−Z⁻¹)

+
+

Ki
――――
1−Z⁻¹

+
+

15

15    I/F

15    I/F

9 rear wheel

yawrate
1 sensor

motor
18 driver

14

13 motor

rear wheel gear

17 positioner

EP 0 551 891 A2

Fig. 7

23

Fig. 8

19 front wheel gear

7 handle

3 handle angle sensor

5

vehicle speed 2 sensor

15 I/F I/F

target yawrate

16

8 front wheel

19:
determination of cotrol constant (map reference, and the like)

10 controller

19 operator

11

Kp

Kd(1−Z⁻¹)

$\dfrac{Ki}{1-Z^{-1}}$

15 I/F

13 motor

18 motor driver

17 positioner

14

rear wheel gear

15 I/F

yawrate 1 sensor

9 rear wheel

24

## Fig. 9

one example of map reference for control constant
against vehicle speed

proportional
control
constant kp

vehicle speed

differential
control constant kd

vehicle speed

integal
control constant ki

vehicle speed

## Fig. 10

the positive of $\Theta_r$ is the same phase
to front wheel steering angle $\Theta_F$

Fig. 11

19 front wheel gear

handle
angle
sensor

3

7 handle

vehicle speed
2 sensor

8 front
wheel

10 controller

11 operator

Kp

Kd(1−Z⁻¹)

$\dfrac{Ki}{1-Z^{-1}}$

15

I/F

I/F

15

I/F

15

I/F

14

17

12

18

13

20

rear wheel
target steering
angle

rear wheel
9

1: yawrate sensor
14: rear wheel gear
12: current command value
17: positioner

18: motor driver
13: motor

27

Fig. 12   control block diagram of yawrate feed back

EP 0 551 891 A2

# Fig. 13

one example of open loop property
of yawrate feed back loop

Fig. 14

# *Fig.15* flow of target steering angle operation

(a)

case of employing differential and integral

| | |
|---|---|
| handle angle<br>handle angle differential value<br>handle angle integral value<br>input | 1501 |
| determination of revere<br>phase component<br>(f2(V)~f4(V) product) | 1502 |
| yawrate input | 1503 |
| determination of same phase<br>component<br>(f1(V) product) | 1504 |
| determination of rear wheel<br>target steering angle<br>(same phase component+<br>reverse phase component) | 1505 |

(b)

case of conduction operation process

| | |
|---|---|
| handle angle input | 1511 |
| determination of reverse<br>phase component<br>(b1s+b2)/(a1s+a2)<br>operation | 1512 |
| yawrate input | 1513 |
| determination of same phase<br>component (f1(V) product) | 1514 |
| determination of rear wheel<br>target steering angle<br>(same phase component+<br>reverse phase component) | 1515 |

## *Fig. 16*

one example of handle
proportion gein and yawrate
gain

handle
proportion gain f2(v)          yawrate gain f1(v)